# EUROPÄISCHE PATENTANMELDUNG

(11) **EP 2 182 302 A2**
(43) Veröffentlichungstag der Anmeldung: **05.05.2010**
(21) Anmeldenummer: 09013478.4
(22) Anmeldetag: 26.10.2009
(51) Int. Cl.: F24J 2/04, F24J 2/46

(54) **Solarkollektor mit Kühlfunktion**

(30) Priorität: 24.10.2008 DE 102008053192
(71) Anmelder: Fraunhofer-Gesellschaft zur Förderung der angewandten Forschung e.V., 80686 München (DE)
(72) Erfinder: Hauser, Gerd, 82166 Gräfelfing (DE)

(57) **Zusammenfassung**

Die Erfindung betrifft einen Solarkollektor mit einer für Solarstrahlung weitgehend transparenten Abdeckung (5), welche eine Außenfläche (11) aufweist, einem Absorber (1), der ausgebildet ist einfallende Solarstrahlung in Wärme umzuwandeln, und einer ersten von einem ersten Wärmeträgerfluid durchströmbaren Einrichtung (2) zur Abfuhr der durch Solarstrahlung gewonnenen Wärme. Ferner ist zur Abfuhr von Wärme aus dem Gebäude eine zweite von einem zweiten Wärmeträgerfluid durchströmbare Einrichtung (8) vorhanden, die derart ausgebildet ist, dass Wärme aus dem zweiten Wärmeträgerfluid an die Außenfläche (11) übertragen werden kann. Der Kollektor zeichnet sich dadurch aus, dass isolierende Mittel vorhanden sind, die bewirken, dass auch nach Beendigung des Kollektorbetriebs noch im Absorber vorhandene Wärme nicht auf die zweite durchströmbare Einrichtung in nennenswertem Umfang übertragen werden kann.

## Beschreibung

### Technisches Gebiet

Die Erfindung betrifft einen Solarkollektor, der neben der Funktion der Wärmegewinnung aus Solarstrahlung auch zur Kühlung eingesetzt werden kann.

### Stand der Technik

Beim Energieverbrauch von Gebäuden spielt zunehmend nicht nur die Beheizung der Gebäude im Winter, sondern auch deren Kühlung im Sommer eine bedeutende Rolle. Auslöser hierfür sind zunehmend großflächig verglaste Fassaden, welche zu einem hohen solaren Wärmeeintrag im Sommer führen. Weiterhin spielen auch in Mitteleuropa zunehmend heiße Sommer eine Rolle. Hinzu kommt, dass die technischen Geräte, deren Anzahl vor allem in Bürogebäuden deutlich zugenommen hat, zu internen Wärmelasten führen, welche ebenfalls abgeführt werden müssen. Zur energetisch günstigen Abfuhr dieser Wärme werden in vielen Fällen Erdwärmetauscher bereitgestellt. Derartige Erdwärmetauscher können jedoch an vielen Stellen nur schwer installiert werden. Insbesondere die nachträgliche Installation ist gelegentlich problematisch. Zudem ist der Bau von Erdwärmetauschern generell mit hohen Investitionskosten verbunden.

Aus der DE 101 51 293 A1 ist ein Flachkollektor bekannt, bei dem der Raum zwischen Deckglas und Absorber bei Erreichen einer bestimmten Temperatur automatisch von Umgebungsluft durchströmt werden kann. Damit soll eine Überhitzung des Kollektors verhindert werden.

Aus der DE 29 30 157 C2 ist eine Vorrichtung zum Schutz eines Gebäudes gegen Temperatureinflüsse bekannt. Dabei dient eine mit unterschiedlich gefärbten Flüssigkeiten durchströmte doppelwandige Platte als Vorbau. Dieser Vorbau begrenzt einen Hohlraum, der an der anderen Seite von einer Wand mit dunkler Beschichtung begrenzt ist. Die Durchströmung der Platte mit verschiedenen Flüssigkeiten gestattet eine Beeinflussung der solaren Wärmegewinne und der Abstrahlung.

Aus der DE 27 17 711 ist bekannt, nachts durch einen Kollektor Wasser zu leiten um dieses durch Abstrahlung zu kühlen.

Aus der DE 26 36 196 ist ein vorgefertigtes Bauelement, beispielsweise eine Außenwand oder ein Dach eines Gebäudes, bekannt. Darauf können Sonnenkollektoren angebracht werden. Es ist erwähnt, dass alternativ ähnliche Einrichtungen angebracht werden können, mit denen durch Abstrahlung eine Kühlung erreicht wird.

### Beschreibung

Aufgabe der vorliegenden Erfindung ist es somit, eine alternative Möglichkeit der energetisch günstigen Abfuhr der Wärme aus Gebäuden bereit zu stellen. Diese Aufgabe wird durch den unabhängigen Anspruch gelöst. Die Unteransprüche geben vorteilhafte Weiterbildungen an.

Kern der Erfindung ist es, einen im Stand der Technik, etwa aus der DE 37 06 196 A1, weithin bekannten Solarkollektor derart abzuwandeln, dass er auch für die Abfuhr der Wärme aus einem Gebäude eingesetzt werden kann. Dabei wird von einem im Stand der Technik üblichen Solarkollektor ausgegangen. Ein solcher Solarkollektor weist normalerweise eine für Sonnenlicht transparente Abdeckung auf. Diese Abdeckung hat eine Außenfläche. Herzstück des Solarkollektors ist ein Absorber, der ausgebildet ist, einfallende Solarstrahlung in Wärme umzuwandeln. Mit diesem Absorber ist eine erste von einem ersten Wärmeträgerfluid durchströmbare Einrichtung zur Abfuhr der durch Solarstrahlung gewonnenen Wärme verbunden. In der Regel handelt es sich hierbei um eine auf der Rückseite, also auf der von der Sonne abgewandten Seite, des Absorbers befindliche Anordnung von Rohren, durch welche ein Wärmeträgerfluid strömen kann. Hierbei ist auf eine gute thermische Kopplung der Rohre mit dem Absorber zu achten. Es ist eine Vielzahl von Varianten im Stand der Technik bekannt.

Zur Abfuhr der Wärme wird der Solarkollektor erfindungsgemäß dahingehend weitergebildet, dass eine zweite von einem zweiten Wärmeträgerfluid durchströmbare Einrichtung vorhanden ist, die derart ausgebildet ist, dass Wärme aus dem zweiten Wärmeträgerfluid an die Außenfläche übertragen werden kann. Dabei ist zu beachten, dass es sich beim ersten Wärmeträgerfluid, welches oben beschrieben worden ist, und beim zweiten Wärmeträgerfluid grundsätzlich um dieselbe Flüssigkeit oder dasselbe Gas handeln kann.

Die Erfindung nutzt die Erkenntnis, dass die Außenfläche, welche bei Solarkollektoren vergleichsweise groß sein kann, vor allem nachts eine große Wärmeübertragungsfläche an die Umgebung darstellt. Günstig kommt dabei hinzu, dass über die Außenfläche eine große Abstrahlung der Wärme an die Umgebung möglich ist, da Solarkollektoren derart angeordnet sind, dass die Außenfläche der Sonne zugewandt ist. Dadurch ist die Außenfläche nicht in Strahlungsverbindung mit anderen strahlenden Gegenständen. Insbesondere in einer klaren Nacht, in der keine Wärmestrahlung von den Wolken auf den Kollektor trifft, ist die auf den Kollektor einfallende Wärmestrahlung sehr gering, während die Abstrahlung ungehindert möglich ist. Damit ist es auch sehr gut möglich, die Außenfläche auf eine Temperatur unterhalb der Umgebungstemperatur herunter zu kühlen. Entsprechend kann auch das zweite Wärmeträgerfluid gekühlt werden. Wetterlagen, bei denen eine starke Kühlung des Gebäudes erforderlich ist, zeichnen sich durch hohen Sonnenschein tagsüber aus. Bei diesen Wetterlagen gibt es aber in der Regel auch klare Nächte, in denen - wie ausgeführt - eine Wärmeabfuhr gut möglich ist. Es sind viele Anordnungen für die zweite durchströmbare Einrichtung denkbar. Wesentlich ist lediglich, dass die Transparenz erhalten bleibt, dass also das einfallende Sonnenlicht zu einem großen Teil auf den Absorber gelangen kann. Ferner muss eine gute thermische Kopplung der zweiten durchströmbaren Einrichtung an die Außenfläche gewährleistet sein, damit die Wärme gut übertragen werden kann.

Ferner ist sicherzustellen, dass auch nach Beendigung des Kollektorbetriebs noch im Absorber vorhandene Wärme nicht auf die zweite durchströmbare Einrichtung in nennenswertem Umfang übertragen werden kann. Es müssen mithin isolierende Mittel vorhanden sein. Dies kann eine einfache Luftschicht sein. Es kommen aber auch evakuierte Bereiche in Frage, welche zusätzlich mit schweren Gasen, etwa Krypton, zur Unterdrückung der Wärmeleitung gefüllt sein können. Wichtig ist, dass die einfallende Sonnenstrahlung weitgehend ungehindert auf den Absorber treffen kann. Bei hocheffizienten Solarkollektoren ist dies jedoch ohnehin gewährleistet, da zur Vermeidung von Wärmeverlusten ohnehin eine Reihe von Maßnahmen getroffen wird, um eine Wärmeabfuhr vom Absorber an die Umgebung zu unterbinden. Zur Vermeidung von Missverständnissen wird klargestellt, dass unter Kollektorbetrieb hierbei die Betriebsweise gemeint ist, in der Wärme aus Sonnenstrahlung gewonnen wird.

Der erfindungsgemäße Kollektor erlaubt es somit, Wärme mit einem Wärmeträgerfluid aus einem Gebäude abzuführen und dieses Wärmeträgerfluid durch die zweite durchströmbare Einrichtung zu leiten. Es ist gegebenenfalls auch möglich verschiedene Wärmeträgerfluide zu verwenden, eines zur Wärmeabfuhr innerhalb des Gebäudes und eines zum Transport der Wärme in den Kollektor. Dann ist freilich ein Wärmetauscher erforderlich, mit dem die abzuführende Wärme vom Wärmeträgerfluid, das innerhalb des Gebäudes fließt, auf das Wärmeträgerfluid, das innerhalb des Kollektors fließt, übertragen werden kann.

Bevorzugt weist die Abdeckung ein erstes Abdeckungselement und ein davon beabstandetes zweites Abdeckungselement auf. Der Zwischenraum zwischen dem ersten Abdeckungselement und dem zweiten Abdeckungselement bildet dabei die vom zweiten Wärmeträgerfluid durchströmbare Einrichtung. Es genügt also in der Regel, zusätzlich zur ohnehin vorhandenen ersten Glasscheibe eine zweite Glasscheibe vorzsuehen. Durch den verbleibenden Zwischenraum kann das zweite Wärmeträgerfluid problemlos strömen. Es versteht sich, dass während des konventionellen Kollektorbetriebs, also in der Zeit, in der der Absorber einfallende Solarstrahlung in Wärme umwandelt, eine Wärmeabfuhr durch die zweite durchströmbare Einrichtung nicht sinnvoll erfolgen kann.

Trotz einer eventuell unerwünschten Erwärmung des zweiten Wärmeträgerfluids ist es denkbar, das zweite Wärmeträgerfluid während der Sonneneinstrahlung in dem Zwischenraum zu belassen. Wenn das Wärmeträgerfluid eine hinreichend hohe Transparenz aufweist, könnte die Transmission der Anordnung aus erstem Abdeckungselement und zweiten Abdeckungselement höher sein, wenn im Zwischenraum ein Wärmeträgerfluid anstelle von Luft vorhanden ist. Grund hierfür ist, dass an den Grenzflächen zwischen Abdeckungselement und Zwischenraum der Unterschied der Brechungsindizes für einfallende Solarstrahlung bei Wärmeträgerfluid niedriger sein könnte als bei Luft.

Bevorzugt ist das zweite Abdeckungselement auf der dem Absorber zugewandten Seite der Abdeckung angeordnet, während das erste Abdeckungselement zum Witterungs- und Wärmeschutz des Kollektors ausgebildet ist. Damit kann als erstes Abdeckungselement die praktisch unveränderte, ohnehin vorhandene Abdeckung des Kollektors dienen. Das zweite Abdeckungselement kann wesentlich weniger aufwändig sein als das erste Abdeckungselement, da es keinen äußeren Witterungsbelastungen wie etwa Sturm und Hagel ausgesetzt ist. Das zweite Abdeckungselement kann somit eine einfache Glasscheibe sein, die lediglich dem geringen Druck des zweiten Wärmeträgerfluids standhalten muss. Etwas anderes würde allenfalls gelten, falls der Raum zwischen Absorber und zweitem Abdeckungselement evakuiert wäre. In diesem Fall müsste das zweite Abdeckungselement einer Druckdifferenz standhalten und entsprechend stabil ausgelegt werden.

Eine Ausführungsform der Erfindung sieht vor, dass eine Umschalteinrichtung vorhanden ist, ein Wärmeträgerfluid als erstes Wärmeträgerfluid durch die erste durchströmbare Einrichtung zu leiten, oder als zweites Wärmeträgerfluid durch die zweite durchströmbare Einrichtung zu leiten. Auf diese Weise könnten bereits vorhandene Zuleitungen zum Kollektor genutzt werden. Es müsste nur im Kollektor umgeschaltet werden. Die Anforderungen an das erste Wärmeträgerfluid, also hohe Wärmekapazität und gute Wärmeleitung, treffen auch auf das zweite Wärmeträgerfluid zu.

Für Stillstandzeiten ist es auch günstig, dass das erste Wärmeträgerfluid in der Regel einen Frostschutz aufweist. Als Anforderung kommt lediglich hinzu, dass das zweite Wärmeträgerfluid transparent sein sollte, und auch keine Stoffe beinhalten sollte, welche sich an den Abdeckungselementen niederschlagen und deren Transparenz einschränken. Somit kommen möglicherweise manche der bisher gebräuchlichen Frostschutzmittel nicht mehr in Betracht. Kleinere Senkungen der Transparenz sind freilich hinnehmbar.

Es ist sinnvoll, wenn der Durchströmungswiderstand der zweiten durchströmbaren Einrichtung in etwa dem Durchströmungswiderstand der ersten durchströmbaren Einrichtung entspricht. Damit kann beispielsweise das gleiche Pumpensystem für konventionellen Kollektorbetrieb und Kühlbetrieb eingesetzt werden.

Wie erwähnt sollte die Transparenz der Abdeckung hoch sein. Dabei ist es wirtschaftlich, wenn der Transmissionsgrad für Solarstrahlung des zweiten Abdeckungselements und des ersten Abdeckungselements möglichst hoch ist.

Aus Kostengründen wird in der Regel, wie oben ausgeführt, als erstes Abdeckungselement die konventionelle Abdeckung des Kollektors, die hohen mechanischen Belastungen, vor allem durch Sturm, Hagel und Schneelasten, ausgesetzt sein kann, benutzt. Auf der dem Absorber zugewandten Seite der Abdeckung ist als zweites Abdeckungselement eine einfache dünne Glasscheibe mit hohen Strahlungstransmissionsgrad vorgesehen. Das erste Abdeckungselement, welches auf der Außenseite liegt, sollte nicht selektiv beschichtet sein, um eine hohe langwellige Abstrahlung zu gewährleisten. Vielmehr sollte es ein hohes Strahlungsemissionsvermögen aufweisen. Dazu sollte der langwellige Emissionsgrad mindestens 0,9 betragen.

Die dem Absorber zugewandte Oberfläche des zweiten Abdeckungselements sollte einen möglichst kleinen Strahlungsabsorptionskoeffizienten aufweisen, um im "Gewinn-Betrieb", also im konventionellen Kollektorbetrieb zum Gewinn solarer Wärme, die Verluste zu minimieren, die jedoch durch das zweite Abdeckungselement ohnehin vermindert werden. Im erfindungsgemäß zusätzlich vorgesehenen " Kühlbetrieb spielt durch den Flüssigkeitskontakt des zweiten Wärmeträgerfluids mit dem zweiten Abdeckungselement der Absorptionskoeffizient und der Transmissionskoeffizient des zweiten Abdeckungselements keine Rolle.

Beschrieben wird auch ein Verfahren zur Abfuhr der Wärme aus einem Gebäude.

### Beispiele

Ohne Einschränkung der Allgemeinheit wird die Erfindung anhand der Figuren beschrieben. Dabei zeigt
- Fig. 1: einen erfindungsgemäßen Solarkollektor
- Fig. 2: den Kühlaufsatz des erfindungsgemäßen Solarkollektors im Detail.

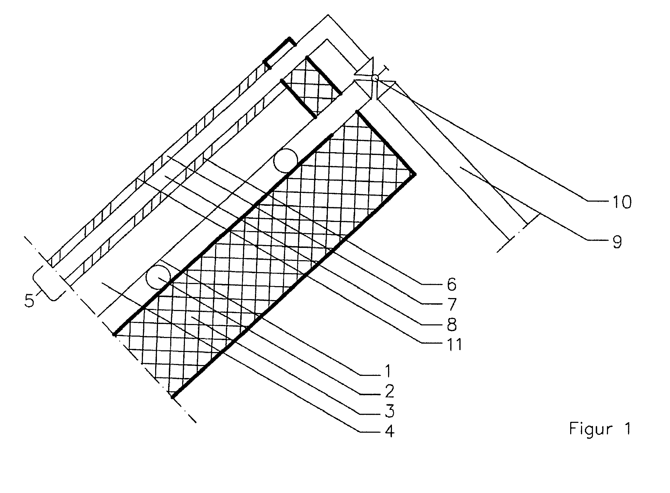

In Figur 1 ist die Erfindung am Beispiel eines solaren Flachkollektors gezeigt. Herzstück dieses Kollektors ist der Absorber 1. Auf ihn trifft die einfallende Solarstrahlung und wird dort in Wärme umgewandelt. Auf der der Sonne abgewandten Seite des Absorbers 1 befindet sich ein mäanderförmiges Rohr 2. Durch dieses Rohr fließt das Wärmeträgermedium und führt die im Absorber 1 gewonnene Wärme zu einem nicht dargestellten Speicher oder Verbraucher. Rückseitig befindet sich eine Wärmedämmung 3. Diese verhindert, dass die Wärme den Solarkollektor unerwünscht verlässt. Auf der der Sonne zugewandten Seite des Absorbers 1 ist ein Dämmbereich 4 angeordnet. Dieser Dämmbereich 4 muss hohe Transparenz für Solarstrahlung aufweisen. Es handelt sich ggf. um einen evakuierten Bereich. In jedem Fall gilt es die Wärmeleitung effizient zu unterbinden. Die einfallende Solarstrahlung kann ungehindert auf den Absorber 1 treffen. Der Dämmbereich 4 wird eingefasst von der Abdeckung 5. Diese besteht aus zwei Glasabdeckungselementen. Ein zweites Glasabdeckungselement 6 ist dem Absorber zugewandt; ein erstes Glasabdeckungselement 7 ist in einem Abstand davon angeordnet und dem Absorber 1 abgewandt. Zwischen den beiden Glasabdeckungselementen 6 und 7 ist ein Zwischenraum, der als Kühlkanal 8 dient. Wie ersichtlich kann durch diesen Kühlkanal 8 das aus der Wärmeträgerfluidleitung 9 fließende Wärmeträgerfluid geleitet werden, wenn die Umschalteinrichtung 10 entsprechend geschaltet ist. Dann gibt das Wärmeträgermedium im Kühlkanal 8 seine Wärme primär an das erste Glasabdeckungselement 7 ab. Da das zweite Glasabdeckungselement 6 zum Absorber 1 hin wie oben dargelegt wärmegedämmt ist, erhält diese relativ rasch weitgehend die Temperatur des Wärmeträgermediums. Sodann kann keine Wärme mehr an das zweite Glasabdeckungselement 6 abgeführt werden. Das erste Glasabdeckungselement 7 wird seinerseits wie nachfolgend erläutert durch die Außenfläche 11 gekühlt und kann damit weiterhin Wärme vom Wärmeträgerfluid im Kühlkanal 8 aufnehmen.

Ein wesentlicher Kühlmechanismus ist hierbei die Abstrahlung der Wärme von der Außenfläche 11. Insbesondere in einer wolkenlosen Nacht erfährt der Kollektor wenig Wärmestrahlung, die auf den Kollektor trifft. Damit wird in der Bilanz wesentlich mehr Wärme von der Außenfläche 11 abgestrahlt als diese an Wärmestrahlung empfängt.

Darüber hinaus findet auch eine Wärmeabgabe durch Konvektion und Leitung an die umgebene Luft statt. Insbesondere bei Wind spielt diese Wärmeleitung eine größere Rolle. Durch die Wärmeleitung aus dem ersten Abdeckungselement 7 bildet sich eine warme Luftschicht direkt unmittelbar oberhalb des ersten Abdeckungselements 7. Wenn diese durch Luftbewegung immer wieder entfernt wird, so findet sich stets neue kühle Luft, an welche die Wärme abgegeben werden kann. Wird der Kollektor zur Wärmegewinnung betrieben, so ist die Umschalteinrichtung 10 so geschaltet, dass das Wärmeträgerfluid durch das Rohr 2 fließt.

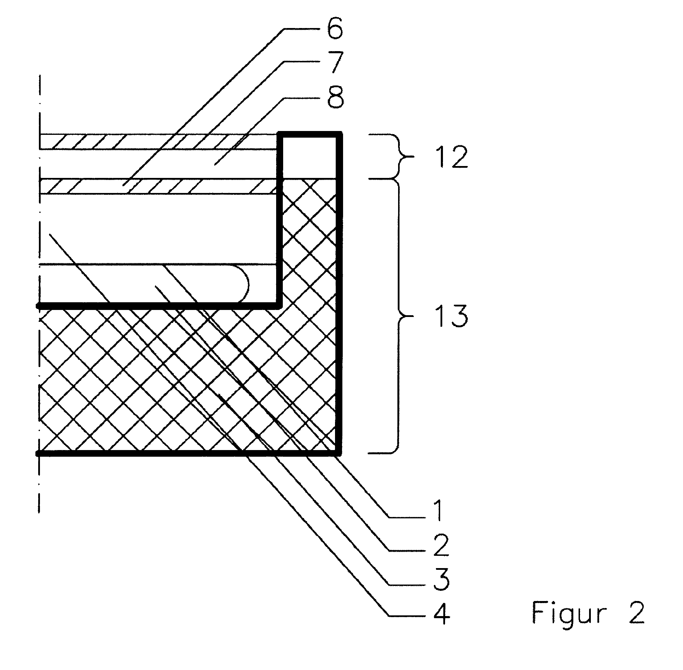

In Figur 2 ist nochmals deutlich gezeigt, welch geringe baulichen Unterschiede der erfindungsgemäße Kollektor gegenüber einem herkömmlichen Solarkollektor aufweisen muss. Es wird ersichtlich, dass der Kühlaufsatz 12 lediglich aus dem zusätzlichen zweiten Glasabdeckungselement 6 und dem Kühlkanal 8 gebildet ist. Die übrigen Bauteile, also das erste Glasabdeckungselement 7, die Dämmschicht 4, der Absorber 1, das Rohr 2 und die Wärmedämmung 3 sind alles Bestandteile des herkömmlichen Solarkollektors 13.

### Bezugszeichenliste

- 1: Absorber
- 2: Rohr
- 3: Wärmedämmung
- 4: Dämmbereich
- 5: Abdeckung
- 6: zweites Glasabdeckungselement
- 7: erstes Glasabdeckungselement
- 8: Kühlkanal
- 9: Wärmeträgerfluidleitung
- 10: Umschalteinrichtung
- 11: Außenfläche
- 12: Kühlaufsatz
- 13: konventioneller Kollektor

## Patentansprüche

1. Solarkollektor mit einer für Solarstrahlung weitgehend transparenten Abdeckung (5), welche eine Außenfläche (11) aufweist, einem Absorber (1), der ausgebildet ist einfallende Solarstrahlung in Wärme umzuwandeln, und einer ersten von einem ersten Wärmeträgerfluid durchströmbaren Einrichtung (2) zur Abfuhr der durch Solarstrahlung gewonnenen Wärme, wobei zur Abfuhr von Wärme aus einem Gebäude eine zweite von einem zweiten Wärmeträgerfluid durchströmbare Einrichtung (8) vorhanden ist, die derart ausgebildet ist, dass Wärme aus dem zweiten Wärmeträgerfluid an die Außenfläche (11) übertragen werden kann, **dadurch gekennzeichnet, dass** isolierende Mittel vorhanden sind, die bewirken, dass auch nach Beendigung des Kollektorbetriebs noch im Absorber vorhandene Wärme nicht auf die zweite durchströmbare Einrichtung in nennenswertem Umfang übertragen werden kann.

2. Solarkollektor nach Anspruch 1, **dadurch gekennzeichnet, dass** die Abdeckung (5) ein erstes Abdeckungselement (7) und ein zweites davon beabstandetes Abdeckungselement (6) aufweist, wobei die vom zweiten Wärmeträgerfluid durchströmbare zweite Einrichtung (8) durch den Zwischenraum zwischen dem ersten Abdeckungselement (7) und dem zweiten Abdeckungselement (6) gebildet ist.

3. Solarkollektor nach Anspruch 2, **dadurch gekennzeichnet, dass** das zweite Abdeckungselement (6) auf der dem Absorber (1) zugewandten Seite der Abdeckung (5) liegt und das zweite Abdeckungselement (6) zur Begrenzung des Wärmedämmbereichs (4) des Kollektors ausgebildet ist.

4. Solarkollektor nach einem der vorhergehenden Ansprüche, **dadurch gekennzeichnet, dass** eine Umschalteinrichtung (10) vorhanden ist, ein Wärmeträgerfluid als erstes Wärmeträgerfluid durch die erste durchströmbare Einrichtung (2) zu leiten oder als zweites Wärmeträgerfluid durch die zweite durchströmbare Einrichtung (8) zu leiten.

5. Solarkollektor nach einem der vorhergehenden Ansprüche, **dadurch gekennzeichnet, dass** der Durchströmungswiderstand der ersten durchströmbaren Einrichtung (2) etwa dem Durchströmungswiderstand der zweiten durchströmbaren Einrichtung (8) entspricht.

6. Solarkollektor nach einem der Ansprüche 0 bis 5, **dadurch gekennzeichnet, dass** der Transmissionsgrad für Solarstrahlung des zweiten Abdeckungselements (6) und des ersten Abdeckungselements (7) möglichst hoch ist.

7. Solarkollektor nach einem der Ansprüche 0 bis 6, **dadurch gekennzeichnet, dass** das zweite Abdeckungselement (6) aus Glas ist.

8. Solarkollektor nach einem der Ansprüche 0 bis 7, **dadurch gekennzeichnet, dass** die dem Absorber (1) zugewandte Fläche des zweiten Abdeckungselements (6) einen niedrigen Strahlungsabsorptionskoeffizienten aufweist.

9. Solarkollektor nach einem der Ansprüche 0 bis 8, **dadurch gekennzeichnet, dass** die Außenfläche (11) einen langwelligen Emissionsgrad von mindestens 0,9 aufweist.

10. Verfahren zur Kühlung eines Gebäudes, **dadurch gekennzeichnet, dass** Wärme aus dem Gebäude mit einem Abwärmeträgerfluid in einen Solarkollektor geleitet wird, wobei der Solarkollektor eine für Solarstrahlung weitgehend transparente Abdeckung (5) umfasst, welche eine Außenfläche (11) aufweist, und einen Absorber (1), der ausgebildet ist einfallende Solarstrahlung in Wärme umzuwandeln, und eine erste von einem weiteren Wärmeträgerfluid durchströmbare Einrichtung (2) zur Abfuhr der durch Solarstrahlung gewonnenen Wärme, wobei zur Abfuhr von Wärme aus einem Gebäude eine zweite durchströmbare Einrichtung (8) mit dem Abwärmeträgerfluid durchströmt wird, und dabei Wärme aus dem Abwärmeträgerfluid an die Außenfläche (11) übertragen wird.

11. Verwendung einer Vorrichtung nach den Ansprüchen 1 bis 9 zur Abfuhr von Wärme aus einem Gebäude.
